# EUROPEAN PATENT SPECIFICATION

(11) **EP 0 241 220 B1**
(45) Date of publication and mention of the grant of the patent: **07.09.1994**
(21) Application number: 87302880.7
(22) Date of filing: 02.04.1987
(51) Int. Cl.: C08B 37/00, C10L 1/32

(54) **Quaternary ammonium salts of xanthan gum**
Quaternäre Ammoniumsalze von Xanthan
Sels d'ammonium quaternaires de la gomme xanthane

(30) Priority: 11.04.1986 US 850467
(43) Date of publication of application: 14.10.1987
(73) Proprietor: Merck & Co., Inc., Rahway New Jersey 07065-0900 (US)
(72) Inventor: Colegrove, George T., San Diego California 92120 (US); Clare, Kenneth, Vista California 92084 (US)
(74) Representative: Bosch, Henry

(56) References cited:
- EP-A- 170 053
- EP-A- 219 281
- EP-A- 237 418
- EP-A- 0 008 628
- GB-A- 876 603
- US-A- 3 163 602
- PATENT ABSTRACTS OF JAPAN, vol. 4, no. 85 (C-15)[567], 18th June 1980; & JP-A-55 48 291

## Description

### BACKGROUND OF THE INVENTION

U.S. Patent 3,163,602 teaches fully derivatized xanthan gum prepared by reacting xanthan gum aqueous solutions (either fermentation broth or solutions from dry powder) with an excess amount of quaternary ammonium compounds. The derivatized gum is insoluble in distilled water but soluble in brine.

E.P.-A-0 237 418 teaches aqueous material compositions containing at least one water soluble cationic organic compound and xanthan gum having a low pyruvic acid content such that the compositions do not form any(insoluble) complex in water. E.P.-A-0 237 418 further teaches that the water soluble cationic compounds which typically form insoluble complexes with xanthan gum are represented mainly by quaternary ammonium compounds(used as pesticides) and that the means of avoiding this complex formation is to reduce the pyruvic acid content of the xanthan gum to less than 2%. Thus E.P.-A-0 237 418 teaches a process in which a reaction between xanthan gum and quaternary ammonium compounds is avoided,

G.B.-A 876 603 teaches organic salts of polymers containing carboxyl groups which are the reaction products of a water swellable natural or synthetic gum and an organic base(e.g. quaternary ammonium compounds) which is present to such an extent that the salt is rendered undispersible in water and readily dispersible in organic solvents.

E.P.-A-0 008 628 teaches an aqueous coal slurry composition comprising water, coal and up to 10 weight %, based on total weight of the composition, of a water soluble polymer such as xanthan gum.

EP-A-0 170 053 describes quaternary ammonium salts of carboxymethylcellulose prepared by adding to an aqueous solution of carboxymethylcellulose, 10% excess amount of a quaternary ammonium compound. There is no description or suggestion for preparing quaternary ammonium salts of xanthan gum, and no description or suggestion that 3% quaternary compound by weight of xanthan gum is the amount at which viscosity retention is enhanced.

EP-A-0 219 281 describes low viscosity xanthan gum prepared by heating a xanthan gum solution in the presence of EDTA, ferrous sulfate, and hydrogen peroxide. Compositions including solid herbicidal bipyridinium quaternary salt/polysaccharide complexes of 14-55% wt. bipyridinium salt, calculated as cation, are described.

### SUMMARY OF THE INVENTION

Quaternary ammonium salts of xanthan gum obtainable by reacting xanthan gum with a quaternary ammonium compound wherein the amount of said quaternary compound is less than the stoichiometric amount of said quaternary ammonium compound necessary for the complete derivatization of the gum, have now been found. The quaternary ammonium salts of xanthan gum are soluble in distilled or tap water and, thus, find much greater applicability than, for example, the brine-soluble fully derivatized gum of U.S.P. 3,163,602. Surprisingly; the quaternary ammonium salts of xanthan gum are also resistant to bacterial degradation and can be used in aqueous solution without a preservative.

By the term "xanthan gum", as used herein, is meant the extracellularly produced gum made by the heteropolysaccharide-producing bacterium Xanthomonas campestris by the whole culture fermentation under a variety of conditions of a medium comprising: a fermentable carbohydrate, a nitrogen source, and other appropriate nutrients. Examples, inter alia, of commercially available xanthan gums are KELTROL^{R} and KELZAN^{R}, available from Kelco Division of Merck & Co., Inc.

Processes for producing xanthan gum are well-known in the art, e.g., U.S. Patent Nos. 4,316,012; 4,352,882; 4,375,512; 3,671,398; 3,433,708; 3,271,267; 3,594,280; 3,591,578; 3,391,061; 3,020,206; 3,481,889; 3,391,060; and UK 1,448,645.

The quaternary ammonium compounds (quats) useful in this invention are those having either (a) a single alkyl or alkenyl substituent containing from about 13 to 24 carbon atoms or its ethylene oxide substituted analog or (b) two alkyl or alkenyl substituents of 12 to 24 carbons per substituent or their ethylene oxide substituted analogs. These are known compounds. An especially useful quat is alkyl dimethylbenzylammonium chloride.

The quaternary ammonium salts of xanthan gum of this invention are obtainable by reacting 100 parts by weight of xanthan gum with 3-10, preferably 5-10, parts by weight of a quaternary ammonium compound wherein the amount of said quaternary compound is less than the stoichiometric amount of said quaternary ammonium compound necessary for the complete derivatization of the gum.

These salts are readily formed by intimately mixing the xanthan gum and the quaternary ammonium compound preferably in an aqueous solution, slurry, or suspension. Generally, this is done under mild conditions such as room temperature and neutral pH. However, temperatures can range from about 10° to 90°C and pH 2-8. High agitation of the reaction mixture is preferred to avoid locally high quat concentrations and consequent formation of fully derivatized gum salts. Although tap water may be used it is preferable that there be no added soluble salts as such salts tend to screen anionic functional groups and thus tend to prevent the gum/quat reaction.

The quaternary ammonium salts of xanthan gum of this invention are self-preserving and require no additional preservative in suspensions such as aqueous coal slurries.

The invention therefore also encompasses coal slurries comprising on a wt./wt. basis 50-78% coal, 0-20% petroleum fuel, 0.01 to 0.1% quaternary ammonium salt of xanthan gum, and water to 100% Preferably, the level of quaternary ammonium salt of xanthan gum is 0.05 to 0.1% and the level of coal is 65-70%. The coal slurries also optionally contain about 1-2% dispersant, preferably an anionic dispersant.

Generally, the quaternary ammonium salts of xanthan gums of this invention are useful in all non-food applications in which the non-derivatized gums are useful. Especially useful are those applications wherein a preservative would normally be used, such as coal slurries, described supra, or other formulations requiring long term storage or where bacterial degradation of the gum is likely to occur.

The invention is further defined by reference to the following examples, which are intended to be illustrative and not limiting.

Temperatures are in degrees Celsius.

### DEPOLYMERIZATION TEST PROTOCOL

Eight xanthan gum polymerase-producing organisms from the genera Arthrobacter, Bacillus, and Coryneform were grown on nutrient agar and swirled together in a sterilized flask to be used for depolymerizing gum samples.

Tests were conducted in 250 ml sterile Erlenmeyer flasks. The test solutions consisted of 50 ml coal slurry (containing 0.05-0.1% xanthan gum), or xanthan gum (at 0.5% concentration) without coal. The inoculum, 2.5 ml of the xanthan degrading organisms, was added. The flasks were swirled to achieve adequate mixing and incubated at 30°C without agitation. After 72 hours, the solutions were removed and the viscosities were tested at 3 and 60 rpm on a Brookfield LVT Viscometer using the No. 2 spindle.

### EXAMPLE 1

### DERIVATIVES FROM DRY GUM

Myristyldimethyl benzyl ammonium chloride, 100% active (Barquat MS-100) in various amounts was dissolved in 25 g de-ionized (DI) water, 10 g xanthan gum (KELZAN) was dissolved in 500 g DI water. The quat solution was added to the xanthan gum solution under high agitation. After mixing for one hour the solution was precipitated with 1000 ml of isopropanol (IPA), dried, and milled. The partially derivatized gum was depolymerized per the Test Protocol and the data of Table 1-1 were obtained.

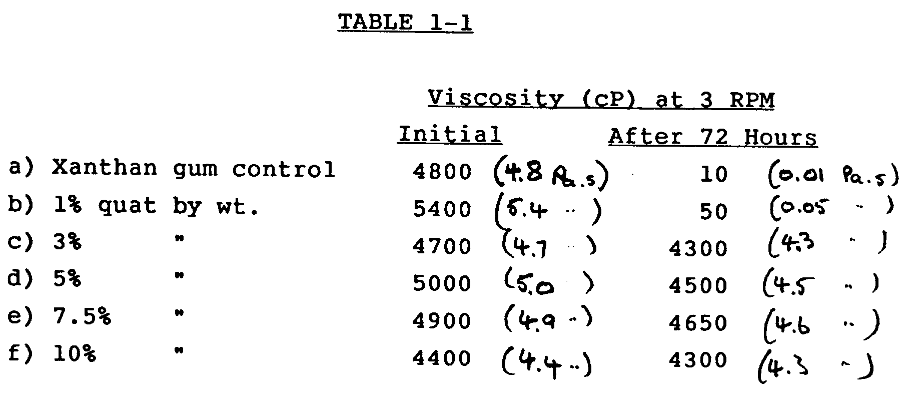

The lowest effective concentration of quat was 3% by weight of xanthan gum.

### EXAMPLE 2

### DERIVATIVES FROM XANTHAN GUM BEER

Various amounts of a 25% solution of Barquat MS-100 were added slowly to 500 g unpasteurized xanthan gum fermentation beer under high agitation and then treated as in Example 1. In an alternate process, the same amounts of quat were added to IPA. The IPA with added quat was then reacted with beer under high agitation to produce partially derivatized gum and to precipitate the gum, which was then dried and milled and depolymerized as in Example 1. The data of Table 2-1 were obtained.

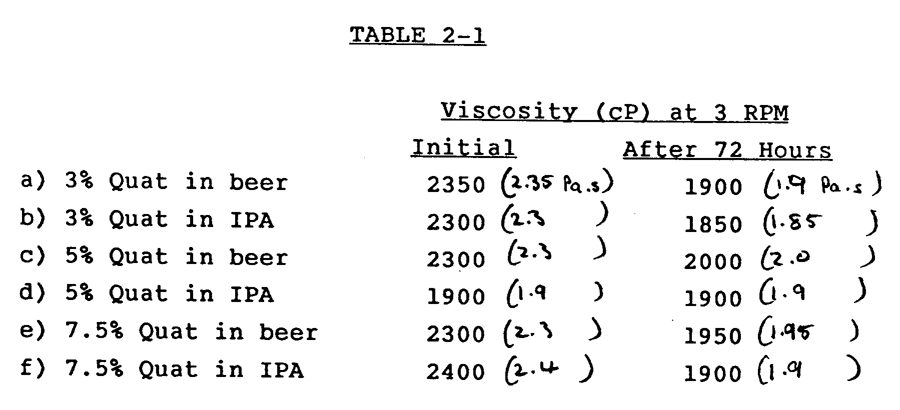

### EXAMPLE 3

### COAL SLURRIES

Coal slurries (1000 g) were prepared with xanthan gum (KELZAN) and 3%, 5% and 7.5% xanthan/quat derivatives as stabilizers using the following formulation, using Barquat MS-100 as the quaternizing compound :

| Coal Formulation | Wt. % |
|---|---|
| Coal | 68.0 |
| Anionic surfactant (Lomar A-23) | 1.67 |
| Morpholine* | 1.0 |
| Xanthan gum | 0.06 |
| (or quat derivative) | (0.063) |
| Water | to 100 |

| | |
|---|---|
| *Buffer to raise pH to 10.0. | |

These were tested according to the Test Protocol and the data of Table 3-1 were obtained. In (a-e), the dispersant Lomar A-23 was used; in (f), Tetronic 1107 was used.

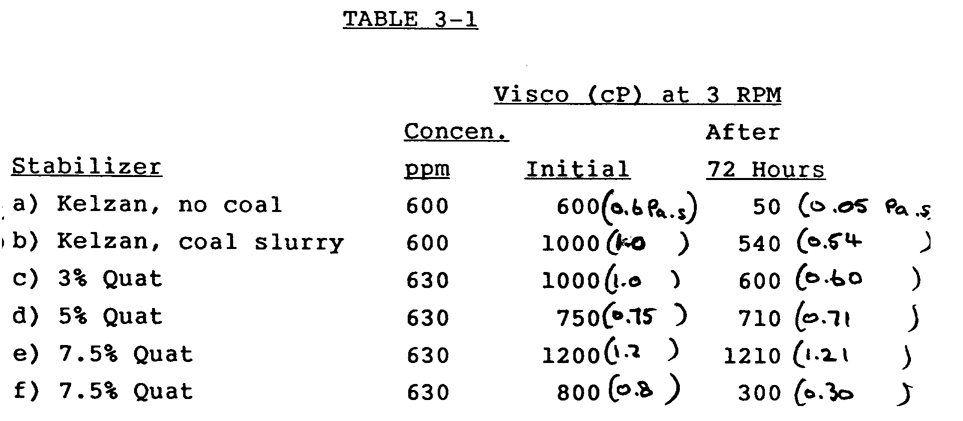

### EXAMPLE 4

A variety of quaternary ammonium salts were prepared by dissolving 1.0 g of active quat in 25 ml DI water, heating to 60°C if necessary to dissolve the quat, and slowly adding the quat with high agitation to 500 g of a 4% gum fermentate. The fermentate with added quat was stirred for one hour and then precipitated with 1000 ml IPA, dried, and milled.

Following the procedure of the Test Protocol, the data of Table 4-1 were obtained.

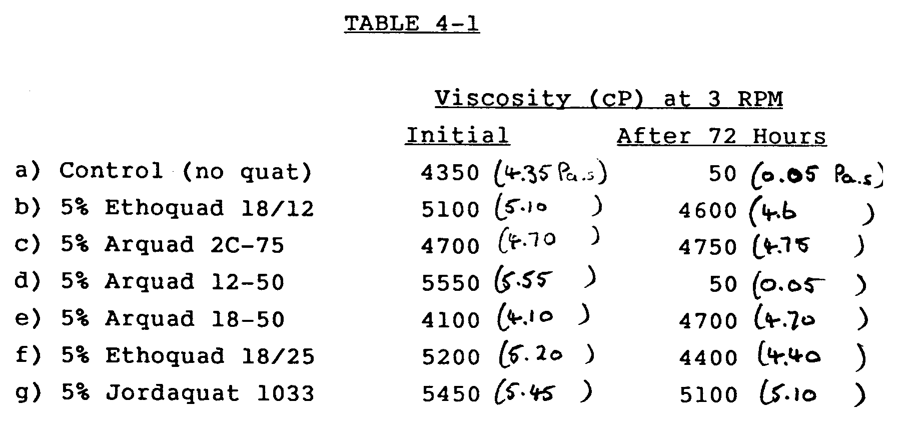

Arguad 12-50 contains a side chain of 12 carbons. Based on these data, xanthan gum quaternary salts prepared from a quat containing a single side chain of less than 13 carbons are not effective.

Chemically, the quats of Table 4-1 are as follows:
Ethoquad 18/12 - octadecyltrimethyl ammonium chloride containing 2 moles ethylene oxide, 70-75% active;
Arquad 2C-75 - dicocodimethyl ammonium chloride, 75% active;
Arquad 12-50 - dicocodimethyl ammonium chloride, 50% active;
Arquad 18-50 - octadecyltrimethyl ammonium chloride, 50% active;
Ethoquad 18/25 - octadecyltrimethyl ammonium chloride containing 15 moles ethylene oxide, 95% active; and
Jordaquat 1033 - soyadimethylethyl ammmonium ethosulfate, 54% active

## Claims

1. A quaternary ammonium salt of xanthan gum obtainable by reacting 100 parts by weight of xanthan gum with 3 to 10 parts by weight of a quaternary ammonium compound wherein the amount of said quaternary compound is less than the stoichiometric amount of said quaternary ammonium compound necessary for the complete derivatization of the gum, said quaternary ammonium compound having either (a) a single alkyl or alkenyl substituent of 13 to 24 carbon atoms or the ethylene oxide substituted analogs thereof, or (b) two alkyl or alkenyl substituents of 12 to 24 carbon atoms or the ethylene oxide substituted analogs thereof.

2. A quaternary ammonium salt of xanthan gum as claimed in Claim 1 obtainable by reacting 100 parts by weight of xanthan gum withn 5 to 10 parts of a weight of a quaternary ammonium compound.

3. A process for preparing quaternary ammonium salts of xanthan gum which comprises intimately mixing, in water at pH 2-8 and 10-90°C, 100 parts by weight of xanthan gum with 3 to 10 parts by weight of a quaternary ammonium compound, wherein the amount of said quaternary compound is less than the stoichiometric amount of said quaternary ammonium compound necessary for the complete derivatization of the gum, said quaternary ammonium compound having either (a) a single alkyl or alkenyl substituent of 13 to 24 carbon atoms or the ethylene oxide substituted analogs thereof, or (b) two alkyl or alkenyl substituents of 12 to 24 carbon atoms or the ethylene oxide substituted analogs thereof, precipitating said quaternary ammonium salt from the water solution using isopropanol and thereafter drying and milling the xanthan gum quaternary ammonium salts.

4. A process of Claim 3 wherein the mixing is under high agitation.

5. An aqueous coal slurry comprising by weight 50-78% coal, 0-20% petroleum fuel, 0.01 to 0.1% quaternary ammonium salt of xanthan gum as claimed in Claim 1, 0-2% dispersant other than the quaternary ammonium salt of claim 1, and water to 100%.

## Patentansprüche

1. Quaternäres Ammoniumsalz von Xanthangummi, zugänglich durch Umsetzung von 100 Gewichtsteilen Xanthangummi mit 3 bis 10 Gewichtsteilen einer quaternären Ammoniumverbindung, worbei die Menge der genannten quaternären Verbindung weniger als die stöchiometrische Menge der genannten quaternären Ammoniumverbindung beträgt, die für die vollständige Derivatisierung des Gummis notwendig ist, wobei die genannte quaternäre Ammoniumverbindung entweder (a) einen einzigen Alkyl- oder Alkenylsubstituenten von 13 bis 24 Kohlenstoffatomen oder die Ethylenoxid-substituierten Analoga davon oder (b) zwei Alkyl- oder Alkenylsubstituenten von 12 bis 24 Kohlenstoffatomen oder die Ethylenoxid-substituierten Analoga davon aufweist.

2. Quaternäres Ammoniumsalz von Xanthangummi nach Anspruch 1, zugänglich durch Umsetzen von 100 Gewichtsteilen Xanthangummi mit 5 bis 10 Gewichtsteilen einer quaternären Ammoniumverbindung.

3. Verfahren zur Herstellung quaternärer Ammoniumsalze von Xanthangummi, welches umfaßt inniges Vermischen in Wasser bei pH 2-8 und 10-90 °C von 100 Gewichtsteilen Xanthangummi mit 3 bis 10 Gewichtsteilen einer quaternären Verbindung, worbei die Menge der genannten quaternären Verbindung weniger als die stöchiometrische Menge der genannten quaternären Ammoniumverbindung beträgt, die zur vollständigen Derivatisierung des Gummis notwendig ist, wobei die genannte quaternäre Ammonium-verbindung entweder (a) einen einzigen Alkyl- oder Alkenylsubstituenten von 13 bis 24 Kohlenstoffatomen oder die Ethylenoxid-substituierten Analoga davon oder (b) zwei Alkyl- oder Alkenylsubstituenten von 12 bis 24 Kohlenstoffatomen oder die Ethylenoxid-substituierten Analoga davon aufweist, Ausfällen des genannten quaternären Ammoniumsalzes aus der wäßrigen Lösung unter Verwendung von Isopropanol und danach Trocknen und Mahlen der quaternären Xanthangummi-Ammoniumsalze.

4. Verfahren nach Anspruch 3, bei dem das Mischen unter kräftigem Rühren stattfindet.

5. Wäßrige Kohleaufschlämmung, umfassend, bezogen auf das Gewicht, 50-78 % Kohle, 0-20 % Erdölbrennstoff, 0,01 bis 0,1 % quaternäres Ammoniumsalz von Xanthangummi nach Anspruch 1, 0-2 % eines anderen Dispersionsmittels als das quaternäre Ammoniumsalz nach Anspruch 1 und Wasser bis 100 %.

## Revendications

1. Sel d'ammonium quaternaire de gomme xanthane qu'on peut obtenir en faisant réagir 100 parties en poids de gomme xanthane avec 3 à 10 parties en poids d'un composé d'ammonium quaternaire, dans lequel la quantité dudit composé d'ammonium quaternaire est inférieure à la quantité stoechiométrique dudit composé d'ammonium quaternaire qui serait nécessaire pour réagir complètement avec la gomme, ledit composé ammonium quaternaire ayant soit (a) un seul substituant alkyle ou alcényle de 13 à 24 atomes de carbone ou leurs analogues substitués par l'oxyde d'éthylène, ou (b) deux substituants alkyle ou alcényle de 12 à 24 atomes de carbone ou leurs analogues substitués par l'oxyde d'éthylène.

2. Sel d'ammonium quaternaire de gomme xanthane, selon la revendication 1 qu'on peut obtenir en faisant réagir 100 parties en poids de gomme xanthane avec 5 à 10 parties en poids d'un composé d'ammonium quaternaire.

3. Procédé de préparation de sels d'ammonium quaternaire de gomme xanthane qui comprend de mélanger intimement, dans l'eau à pH 2-8 et à 10-90°C, 100 parties en poids de gomme xanthane avec 3 à 10 parties en poids d'un composé d'ammonium quaternaire, dans lesquels la quantité dudit composé ammonium quaternaire est inférieure à la quantité stoechiométrique dudit composé quaternaire qui serait nécessaire pour réagir complètement avec la gomme, ledit composé d'ammonium quaternaire a soit (a) un seul substituant alkyle ou alcényle de 13 à 24 atomes de carbone, ou leurs analogues substitués par l'oxyde d'éthylène, ou (b) deux substituants alkyle ou alcényle de 12 à 24 atomes de carbone ou leurs analogues substitués par l'oxyde d'éthylène, de faire précipiter dedit sel d'ammonium quaternaire de la solution aqueuse à l'aide de l'isopropanol, et ensuite on sèche et on broie les sels d'ammonium quaternaire de gomme xanthane.

4. Procédé selon la revendication 3 dans lequel on réalise le mélange sous agitation énergique.

5. Pâte aqueuse de charbon comprenant en poids 50-78% de charbon, 0-20% de combustible pétrolier, 0,01 à 0,1% de sel d'ammonium quaternaire de gomme xanthane selon la revendication 1, 0-2% de dispersant différent du sel d'ammonium quaternaire de la revendication 1, et de l'eau pour compléter à 100%.
